# EUROPEAN PATENT SPECIFICATION

(11) **EP 4 699 773 B1**
(45) Date of publication and mention of the grant of the patent: **10.06.2026**
(21) Application number: 24195388.4
(22) Date of filing: 20.08.2024
(51) Int. Cl.: B29B 9/16, B29B 9/12, C08J 3/12, C08J 3/14, B33Y 70/00, B29K 23/00

(54) **METHOD FOR SPHEROIDIZING POLYMER POWDER PARTICLES AND USE THEREOF IN THREE-DIMENSIONAL PRINTING**
VERFAHREN ZUM SPHÄROIDISIEREN VON POLYMERPULVERPARTIKELN UND DEREN VERWENDUNG IM DREIDIMENSIONALEN DRUCKEN
PROCÉDÉ DE SPHÉROÏDISATION DE PARTICULES DE POUDRE DE POLYMÈRE ET LEUR UTILISATION DANS L'IMPRESSION TRIDIMENSIONNELLE

(43) Date of publication of application: 25.02.2026
(73) Proprietor: Evonik Operations GmbH, 45128 Essen (DE)
(72) Inventor: Hussain, Muhammad, 63486 Bruchköbel (DE); Schmid, Vera, 60326 Frankfurt (DE); Tschernjaew, Juri, 63743 Aschaffenburg (DE)
(74) Representative: Evonik Patent Association

(56) References cited:
- EP-A1- 3 693 406
- CN-A- 101 649 056
- CN-A- 104 177 631
- CN-A- 104 194 326
- CN-A- 107 825 621
- US-A- 3 503 948
- US-A1- 2012 328 880
- US-A1- 2020 406 351

## Description

### TECHNICAL FIELD

The present invention relates to a method for spheroidizing polymer powders particles, especially for use in methods of layer-by-layer tool-free production of three-dimensional objects. The invention further relates to polymer powder particles, to uses of the powder, and to a shaped body produced using the powder.

### TECHNICAL BACKGROUND

The rapid provision of prototypes or small batches is a problem that has frequently been encountered in recent times. Processes that enable this are called rapid prototyping, rapid manufacturing or else additive fabrication methods, or even just 3D printing.

Particularly suitable processes are those that operate on the basis of pulverulent materials and in which the desired structures are produced layer by layer in a tool-free manner by selective melting and solidification. Supporting structures in the case of overhangs and undercuts can be dispensed with since the powder bed surrounding the molten regions provides sufficient support. The subsequent work of removing supports is accordingly avoided. After cooling and solidification of the regions melted layer by layer beforehand, the shaped body can be removed from the powder bed. The methods that work by these principles are embraced herein by the umbrella term of powder bed fusion methods (also referred to hereinafter as PBF methods for short), vat photopolymerization like stereolithography or binder jetting. Appropriate methods are defined in ISO/ASTM 52900:2015.

Sun et al. in Powder Technology 2023, 415, 118189, describe a method of spheroidization of irregular polypropylene particles. The particles were dispersed in polyethylene glycol and then subjected to microwave heating to realize rapid spheroidization. For polymer powders like polyether ketone ketone with higher melting or softening points, respectively, Sun explained using PEG as the dispersion medium could not heat these powders to the desired high temperatures to realize spheroidization.

CN 104194326 A discloses a preparation method of nylon powder for 3D (three-dimensional) printing. In a first step, polymer powder particles are added to sodium dodecylbenzenesulfonate. In CN 107825621 A a Polymer-based micron/nano functional composite spherical powder and preparing method thereof is described.

It is therefore an object of the present invention to provide a new method for spheroidizing polymer powder particles. The spheroidized polymer powder particles shall be usable in three-dimensional printing methods.

### ABSTRACT

It has been found that, surprisingly, the object can be achieved by using ionic liquids instead of polyethylene glycol for dispersing polymer powders with higher melting or softening points as polypropylene.

The object has been solved by the method in accordance with claim 1. Preferred embodiments are described in the dependent claims.

As to the invention a method for spheroidizing polymer powder particles has been found which comprises the sequentially steps A) to C). In step A) the polymer powder particles are added to ionic liquids obtaining a polymer dispersion. Subsequently, in step B) energy is exposed to the polymer dispersion. Then, the polymer dispersion is reprocessed to obtain spheroidized polymer powder particles.

### DETAILED DESCRIPTION

The polymer powder particles preferably comprise polymeric particles formed from a material comprising at least one thermoplastic polymer, where the at least one thermoplastic polymer is more preferably selected from the group consisting of polyolefins like polyethylene or polypropylene, polyvinylchloride, polystyrene, polycarbonates, polyoxymethylene, polyimides, polysulfones, poly(N-methylmethacrylimides), polycarbonate (PC)-acrylonitrile-butadiene-styrene (ABS), ionomers, polymethylmethacrylate, polyvinylidenefluorides, polyetherketones, polyaryletherketones, polyamides and copolymers, mixtures and combinations thereof, where the at least one thermoplastic polymer even more preferably comprises a polyetherketone, polyaryletherketone like polyether ether ketone, homopolyamide, a copolyamide or a mixture of homo- and copolyamide. Appropriate homopolyamides are polyamide 11 or polyamide 12.

The polymer powder particles are added to ionic liquids. The cation of the ionic liquids is preferably selected from the group consisting of 1-ethyl-3-methyl-imidazolium ([EMIM]), 1-butyl-3-methyl-imidazolium ([BMIM]), 1-hexyl-3-methyl-imidazolium ([HMIM]), 1-octyl-3-methyl-imidazolium ([OMIM]), 1-decyl-3-methyl-imidazolium ([DMIM]), 1-methyl-imidazolium ([MIM]), 1,2-dimethyl-imidazolium ((M12IM]), 1,3-dimethyl-imidazolium ([M13IM]), 1,2,3-trimethyl-imidazolium ([MMMIM]), 1-ethyl-2,3-dimethyl-imidazolium ([EMMIM]), 1-butyl-2,3-dimethyl-imidazolium ([BMMIM]), 1-allyl-3-methyl-imidazolium ([AMIM]), 1-allyl-3-butyl-imidazolium ([ABIM]), 1-allyl-3-vinyl-imidazolium ([AVIM]), 1-(2-hydroxylethyl)-3-methylimidazolium ([HOEMlm]), N-ethyl-pyridinium ([EPy]), N-butyl-pyridinium ([BPy]), tetradecyltrihexylphosphonium ([P66614]), and tetrabutylphosphonium ([P4444]), wherein 1-butyl-3-methyl-imidazolium ([BMIM]) is more preferred.

The anion of the ionic liquids is preferably selected from the group consisting of tetrafluoroborate ([BF4]), hexafluorophosphate ([PF6]), bis(trifluoromethylsulfonyl) imide ([Tf2N]), acetate ([Ac]), chloride ([Cl]), bromide ([Br]), iodide ([I]), nitrate ([NO3]), trifluoromethanesulfonate ([TFO]), perchlorate ([CIO4]), dicyanamide ([DCA]), hydrogen sulfate ([HSO4]), dihydrogen phosphate ([H2PO4]), tosylate ([TS]), glycinate ([Gly]), alaninate ([Ala]), serinate ([Ser]), glutamate ([Glu]), lysinate ([Lys]), and prolinate ([Pro]), wherein tetrafluoroborate ([BF4]) is more preferred.

The even more preferred ionic liquid contains or is selected from [BMIM][BF4] while the most preferred ionic liquid is [BMIM][BF4]. When performing the inventive method it is most preferred to apply [BMIM][BF4] as ionic liquid and polyetherketone, polyaryletherketone, homopolyamide, a copolyamide or a mixture of homo- and copolyimide as polymer powder particles to be spheroidized.

The person skilled in the art regulates temperature and pressure in a way that the ionic liquid is liquid. Appropriate temperature are in a range of 10 °C to 30 °C, appropriate pressure is in a rage of 980 hPa to 1020 hPa.

For performing the inventive method the ionic liquids have decomposition temperature which is higher than the melting point of the polymer powder particles. The decomposition temperature is defined as described as Tonset in °C by Y. Cao et al. in Industrial & Engineering Chemistry Research 2024, 53, 8651.;
In step A) at least one segregation agent is preferably added. This agent supports the segregation of polymer power particles and the ionic liquids. Appropriate segregation agents are selected from zinc oxide, silicon carbide and silicon oxide.
In step B) the energy is microwave energy. Microwave is used as the application of energy via e.g. frequency and time is easy to adjust.
In step C) the reprocessing of the polymer solution in step C preferably comprises quenching, centrifugation, removal of ionic liquid with pipette, filtration, washing of powder with water, washing with alcohols like ethanol, drying in an oven.

The spheroidized polymer powder particles obtained by the inventive method have an average sphericity of 0.90 to 1. The average sphericity of the particles is measured by calculating the sphericity of the particles on the basis of scanning electron microscopy (SEM) pictures computationally.

Appropriate three-dimensional printing methods are selected from powder bed fusion, vat photopolymerization or binder jetting. The methods are defined in ISO/ASTM 52900:2015.

A further aspect described herin are spheroidized polymer powder particles obtainable by the inventive method.

Another aspect of the invention shaped bodies produced by means of three-dimensional printing method using spheroidized polymer powder particles produced by the inventive method or spheroidized polymer powder particles obtainable by the inventive method.

One further aspect of the invention is the use of spheroidized polymer powder particles produced by the inventive method or spheroidized polymer powder particles obtainable by the inventive method.

The invention is illustrated by figures 1-5. Fig. 1 is illustrating a polyether ether ketone (PEEK) irregular powder before spheroidization. Fig. 2 is illustrating a PEEK round particle after the spheroidization step. Fig. 3 is illustrating a polyamide 12 (PA12) irregular powder before spheroidization. Fig. 4 is illustrating a PA12 round particles after the spheroidization step. Fig. 5: is also illustrating a PA12 round particles after the spheroidization step.

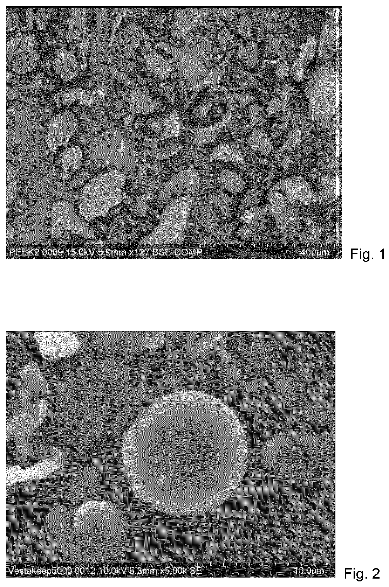

Fig. 1 describes a PEEK powder-feed before spheroidization. Polyether ether ketone due to his hard processing conditions (melting point ~ 343 °C) is not easy to spheroidize with the conventional spheroidization technologies. Especially in the mentioned process using microwave as energy source, a reliable dispersant is required to withhold at higher temperature. Ionic liquids in general and [BMIM] [BF4] in particular due to its higher temperature stability (~ 400 °C) solve the technical problem as mentioned above.
Fig. 2 demonstrates a spheroidized PEEK powder after the treatment. The smooth round particle mentioned in the diagram is formed after ~ 3 min microwave treatment at ~ 360°C to relax the surface energies of the irregular powder.

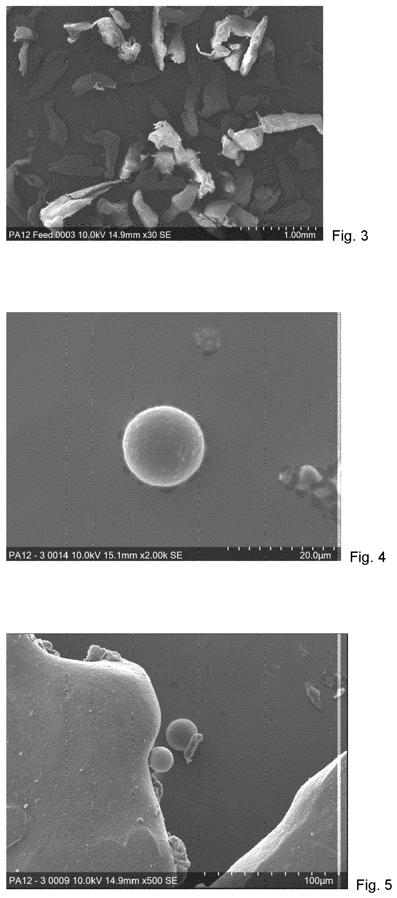

Fig. 3 mentions a PA 12 powder-feed before spheroidization. The feed powder used was grinded and had a broad particle size distribution (< 500 µm).
Fig. 4 & Fig. 5 mention the spheroidization of PA12 powder after the microwave treatment for ~3 min at ~195°C using [BMIM] [BF4] as the continuous phase. The densities of the powder and the dispersing medium should be matching to obtain an optimized suspension. Ionic liquids can be designed as per requirement due to their tuneable properties and therefore, are good candidate for the spheroidization of different polymer powders.

The examples that follow will describe the method of spheroidizing polymer powder particles according to the invention, without limiting the invention to the examples.

### EXAMPLES

All amounts stated in the examples are based on parts by weight, unless stated otherwise.

### Example 1: Spheroidizing polymer powder particles containing polyether ether ketone (PEEK)

0,5 mg (4,5 wt.%) PEEK (VESTAKEEP 5000P of Evonik Germany, cf. Fig. 1) was dissolved in 11 g [BMIM][BF4]. The dispersed suspension was treated in a lab-scale microwave oven (MW5000 of Landgraf HLL, Germany) with a rated power of 1500 W and a frequency of 2450 MHz. The oven was modified with a magnetic stirring arrangement to keep suspension in a steady form. Furthermore, a water-cooling arrangement has been devised to keep the surrounding cool during the experiment. The oven was adjusted to a temperature of 360°C with 20% microwave power and hold for 3 mins before quenching. The temperature of suspension after microwave heating was measured using a thermocouple at different time intervals. Slight stirring was used to keep the suspension in a steady form. The suspension was quenched, and Ionic liquid was separated using a lab scale centrifuge (Eppendorf mini spin) 5000 rpm for 20 mins followed by diluting with deionized water to remove rest of the Ionic liquid through centrifugation. As a third washing step ethanol was added to remove the rest of the water followed by the centrifugation step to remove ethanol. The wet powder obtained was spread on an aluminium petri-dish to remove the excessive solvent at 80°C (adjustable) in a lab exhaust for 3 hrs. The water washing was used to separate the water-soluble Ionic liquids. In the end, spheroidized PEEK powder particles were obtained (cf. Fig. 2).

### Example 2: Spheroidizing polymer powder particles containing polyamide 12

0,52 g (4,7 wt.%) Polyamide 12 (Vestosint of Evonik Germany, cf. Fig. 3) was dissolved in 11 g [BMIM][BF4]. The dispersed suspension was treated in a lab-scale microwave oven (MW5000 of Landgraf HLL, Germany) with a rated power of 1500 W and a frequency of 2450 MHz. The oven was modified with a magnetic stirring arrangement to keep suspension in a steady form. Furthermore, a water-cooling arrangement was devised to keep the surrounding cool during the experiment. The oven was adjusted to a temperature of 200 °C with 20% microwave power and hold for 3 mins before quenching. The temperature of suspension after microwave heating was measured using a thermocouple at different time intervals. Slight stirring was used to keep the suspension in a steady form. The suspension was quenched, and Ionic Liquid was separated using a lab scale centrifuge (Eppendorf mini spin) 5000 rpm for 20 mins followed by diluting with deionized water to remove rest of Ionic liquid through centrifugation. As a third washing step ethanol was added to remove the rest of the water followed by the centrifugation step to remove ethanol. The wet powder obtained was spread on an aluminium petri-dish to remove the excessive solvent at 80°C (adjustable) in a lab exhaust for 3 hrs. The water washing was used to separate the water-soluble Ionic liquids. In the end, spheroidized PA12 powder particles were obtained (cf. Fig. 4; Fig. 5).

## Claims

1. Method for spheroidizing polymer powder particles, especially for use in a three-dimensional printing method, comprising the sequentially steps
A) adding polymer powder particles to ionic liquids obtaining a polymer dispersion,
B) exposure of energy to the polymer dispersion, and
C) reprocessing of the polymer dispersion to obtain spheroidized polymer powder particles,
wherein the decomposition temperature of the ionic liquid is higher than the melting point of the polymer powder particles,
**characterized in that** the energy in step B is selected from microwave energy and that the cation of the ionic liquids is selected from the group consisting of 1-ethyl-3-methyl-imidazolium ([EMIM]), 1-butyl-3-methyl-imidazolium ([BMIM]), 1-hexyl-3-methyl-imidazolium ([HMIM]), 1-octyl-3-methyl-imidazolium ([OMIM]), 1-decyl-3-methyl-imidazolium ([DMIM]), 1-methyl-imidazolium ([MIM]), 1,2-dimethyl-imidazolium ([M12IM]), 1,3-dimethyl-imidazolium ([M13IM]), 1,2,3-trimethyl-imidazolium ([MMMIM]), 1-ethyl-2,3-dimethyl-imidazolium ([EMMIM]), 1-butyl-2,3-dimethyl-imidazolium ([BMMIM]), 1-allyl-3-methyl-imidazolium ([AMIM]), 1-allyl-3-butyl-imidazolium ([ABIM]), 1-allyl-3-vinyl-imidazolium ([AVIM]), 1-(2-hydroxylethyl)-3-methylimidazolium ([HOEMlm]), N-ethyl-pyridinium ([EPy]), N-butyl-pyridinium ([BPy]), tetradecyltrihexylphosphonium ([P66614]), and tetrabutylphosphonium ([P4444]) or
that the anion of the ionic liquids is selected from the group consisting of tetrafluoroborate ([BF4]), hexafluorophosphate ([PF6]), bis(trifluoromethylsulfonyl) imide ([Tf2N]), acetate ([Ac]), chloride ([Cl]), bromide ([Br]), iodide ([I]), nitrate ([NO3]), trifluoromethanesulfonate ([TFO]), perchlorate ([CIO4]), dicyanamide ([DCA]), hydrogen sulfate ((HSO4]), dihydrogen phosphate ([H2PO4]), tosylate ([TS]), glycinate ([Gly]), alaninate ([Ala]), serinate ([Ser]), glutamate ([Glu]), lysinate ([Lys]), and prolinate ([Pro]).

2. The method according to claim 1, **characterized in that** the polymer powder particles comprise polymeric particles formed from a material comprising at least one thermoplastic polymer, where the at least one thermoplastic polymer is preferably selected from the group consisting of polyolefins like polyethylene or polypropylene, polyvinylchloride, polystyrene, polycarbonates, polyoxymethylene, polyimides, polysulfones, poly(N-methylmethacrylimides), polycarbonate (PC), acrylonitrile-butadiene-styrene (ABS), ionomers, polymethylmethacrylate, polyvinylidenefluorides, polyetherketones, polyaryletherketones, polyamides and copolymers, mixtures and combinations thereof, where the at least one thermoplastic polymer more preferably comprises a polyetherketone, polyaryletherketone, homopolyamide, a copolyamide or a mixture of homo- and copolyamide.

3. The method according to any of the preceding claims, **characterized in that** that the cation of the ionic liquids is selected from the group consisting of 1-ethyl-3-methyl-imidazolium ([EMIM]), 1-butyl-3-methyl-imidazolium ([BMIM]), 1-hexyl-3-methyl-imidazolium ([HMIM]), 1-octyl-3-methyl-imidazolium ([OMIM]), 1-decyl-3-methyl-imidazolium ([DMIM]), 1-methyl-imidazolium ([MIM]), 1,2-dimethyl-imidazolium ([M12IM]), 1,3-dimethyl-imidazolium ([M13IM]), 1,2,3-trimethyl-imidazolium ([MMMIM]), 1-ethyl-2,3-dimethyl-imidazolium ([EMMIM]), 1-butyl-2,3-dimethyl-imidazolium ([BMMIM]), 1-allyl-3-methyl-imidazolium ([AMIM]), 1-allyl-3-butyl-imidazolium ([ABIM]), 1-allyl-3-vinyl-imidazolium ([AVIM]), 1-(2-hydroxylethyl)-3-methylimidazolium ([HOEMIm]), N-ethyl-pyridinium ([EPy]), N-butyl-pyridinium ([BPy]), tetradecyltrihexylphosphonium ([P66614]), and tetrabutylphosphonium ([P4444]) and
that the anion of the ionic liquids is selected from the group consisting of tetrafluoroborate ([BF4]), hexafluorophosphate ([PF6]), bis(trifluoromethylsulfonyl) imide ([Tf2N]), acetate ([Ac]), chloride ([Cl]), bromide ([Br]), iodide ([I]), nitrate ([NO3]), trifluoromethanesulfonate ([TFO]), perchlorate ([CIO4]), dicyanamide ([DCA]), hydrogen sulfate ((HSO4]), dihydrogen phosphate ([H2PO4]), tosylate ([TS]), glycinate ([Gly]), alaninate ([Ala]), serinate ([Ser]), glutamate ([Glu]), lysinate ([Lys]), and prolinate ([Pro]).

4. The method according to any of the preceding claims, **characterized in that** the cation of the ionic liquids is 1-butyl-3-methyl-imidazolium ([BMIM]).

5. The method according to any of the preceding claims, **characterized in that** the anion of the ionic liquids is tetrafluoroborate ([BF4]).

6. The method according to claim 4 or 5, **characterized in that** the ionic liquid contains [BMIM][BF₄].

7. The method according to claim 6, **characterized in that** the polymer powder particles are selected from polyetherketone, polyaryletherketone, homopolyamide, a copolyamide or a mixture of homo-and copolyamide.

8. The method according to any of the preceding claims, **characterized in that** reprocessing of the polymer solution in step C comprises quenching, centrifugation, removal of ionic liquid with pipette, filtration, washing of powder with water, washing with alcohols like ethanol, drying in an oven.

9. The method according to any of the preceding claims, **characterized in that** in step A at least one segregation agent selected from zinc oxide, silicon carbide and silicon oxide is added to ionic liquids.

10. The method according to any of the preceding claims, **characterized in that** the three-dimensional printing method is selected from powder bed fusion, vat photopolymerization or binder jetting.

11. The method according to any of the preceding claims, **characterized in that** the spheroidized polymer powder particles have an average sphericity of 0.90 to 1.

12. Shaped body produced by means of three-dimensional printing method using spheroidized polymer powder particles produced by a method according to any of Claims 1 to 11.

13. Use of spheroidized polymer powder particles **characterized in that** the particles are produced by a method according to any of Claims 1 to 11.

## Patentansprüche

1. Verfahren zur Sphäroidisierung von Polymerpulverpartikeln, insbesondere zur Verwendung bei einem dreidimensionalen Druckverfahren, umfassend die aufeinanderfolgenden Schritte
A) Zugeben von Polymerpulverpartikeln zu ionischen Flüssigkeiten, um eine Polymerdispersion zu erhalten,
B) Exponieren der Polymerdispersion gegenüber Energie und
C) Aufbereiten der Polymerdispersion, um sphäroidisierte Polymerpulverpartikel zu erhalten, wobei die Zersetzungstemperatur der ionischen Flüssigkeit höher als der Schmelzpunkt der Polymerpulverpartikel ist, **dadurch gekennzeichnet, dass** die Energie bei Schritt B ausgewählt ist aus Mikrowellenenergie und
dass das Kation der ionischen Flüssigkeiten ausgewählt ist aus der Gruppe bestehend aus 1-Ethyl-3-methylimidazolium ([EMIM]), 1-Butyl-3-methylimidazolium ([BMIM]), 1-Hexyl-3-methylimidazolium ([HMIM]), 1-Octyl-3-methylimidazolium ([OMIM]), 1-Decyl-3-methylimidazolium ([DMIM]), 1-Methylimidazolium ([MIM]), 1,2-Dimethylimidazolium ([M12IM]), 1,3-Dimethylimidazolium ([M13IM]), 1,2,3-Trimethylimidazolium ([MMMIM]), 1-Ethyl-2,3-dimethylimidazolium ([EMMIM]), 1-Butyl-2,3-dimethylimidazolium ([BMMIM]), 1-Allyl-3-methylimidazolium ([AMIM]), 1-Allyl-3-butylimidazolium ([ABIM]), 1-Allyl-3-vinylimidazolium ([AVIM]), 1-(2-Hydroxyethyl)-3-methylimidazolium ([HOEMIm]), N-Ethylpyridinium ([EPy]), N-Butylpyridinium ([BPy]), Tetradecyltrihexylphosphonium ([P66614]) und Tetrabutylphosphonium ([P4444]) oder
dass das Anion der ionischen Flüssigkeiten ausgewählt ist aus der Gruppe bestehend aus Tetrafluorborat ([BF4]), Hexafluorphosphat ([PF6]), Bis(trifluormethylsulfonyl)imid ([Tf2N]), Acetat ([AC]), Chlorid ([Cl]), Bromid ([br]), Iodid ([i]), Nitrat ([NO3]), Trifluormethansulfonat ([TFO]), Perchlorat ([CIO4]), Dicyanamid ([DCA]), Hydrogensulfat ([HSO4]), Dihydrogenphosphat ([H2PO4]), Tosylat ([TS]), Glycinat ([Gly]), Alaninat ([Ala]), Serinat ([Ser]), Glutamat ([Glu]), Lysinat ([Lys]) und Prolinat ([Pro]).

2. Verfahren nach Anspruch 1, **dadurch gekennzeichnet, dass** die Polymerpulverpartikel Polymerpartikel umfassen, die aus einem Material gebildet sind, das wenigstens ein thermoplastisches Polymer umfasst, wobei das wenigstens eine thermoplastische Polymer vorzugsweise ausgewählt ist aus der Gruppe bestehend aus Polyolefinen, Polyethylen, Polypropylen, Polyvinylchlorid, Polystyrol, Polycarbonaten, Polyoxymethylen, Polyimiden, Polysulfonen, Poly-(N-methylmethacrylimiden), Polycarbonat (PC)-Acrylnitril-Butadien-Styrol (ABS), Ionomeren, Polymethylmethacrylat, Polyvinylidenfluoriden, Polyetherketonen, Polyaryletherketonen, Polyamiden sowie Copolymeren, Gemischen und Kombinationen davon, wobei das wenigstens eine thermoplastische Polymer bevorzugter ein Polyetherketon, Polyaryletherketon, Homopolyamid, ein Copolyamid oder ein Gemisch von Homo- und Copolyamid umfasst.

3. Verfahren nach einem der vorstehenden Ansprüche, **dadurch gekennzeichnet, dass** das Kation der ionischen Flüssigkeiten ausgewählt ist aus der Gruppe bestehend aus 1-Ethyl-3-methylimidazolium ([EMIM]), 1-Butyl-3-methylimidazolium ([BMIM]), 1-Hexyl-3-methylimidazolium ([HMIM]), 1-Octyl-3-methylimidazolium ([OMIM]), 1-Decyl-3-methylimidazolium ([DMIM]), 1-Methylimidazolium ([MIM]), 1,2-Dimethylimidazolium ([M12IM]), 1,3-Dimethylimidazolium ([M13IM]), 1,2,3-Trimethylimidazolium ([MMMIM]), 1-Ethyl-2,3-dimethylimidazolium ([EMMIM]), 1-Butyl-2,3-dimethylimidazolium ([BMMIM]), 1-Allyl-3-methylimidazolium ([AMIM]), 1-Allyl-3-butylimidazolium ([ABIM]), 1-Allyl-3-vinylimidazolium ([AVIM]), 1-(2-Hydroxyethyl)-3-methylimidazolium ([HOEMIm]), N-Ethylpyridinium ([EPy]), N-Butylpyridinium ([BPy]), Tetradecyltrihexylphosphonium ([P66614]) und Tetrabutylphosphonium ([P4444]) und
dass das Anion der ionischen Flüssigkeiten ausgewählt ist aus der Gruppe bestehend aus Tetrafluorborat ([BF4]), Hexafluorphosphat ([PF6]), Bis(trifluormethylsulfonyl)imid ([Tf2N]), Acetat ([AC]), Chlorid ([Cl]), Bromid ([br]), Iodid ([i]), Nitrat ([NO3]), Trifluormethansulfonat ([TFO]), Perchlorat ([CIO4]), Dicyanamid ([DCA]), Hydrogensulfat ([HSO4]), Dihydrogenphosphat ([H2PO4]), Tosylat ([TS]), Glycinat ([Gly]), Alaninat ([Ala]), Serinat ([Ser]), Glutamat ([Glu]), Lysinat ([Lys]) und Prolinat ([Pro]).

4. Verfahren nach einem der vorstehenden Ansprüche, **dadurch gekennzeichnet, dass** das Kation der ionischen Flüssigkeiten 1-Butyl-3-methylimidazolium ([BMIM]) ist.

5. Verfahren nach einem der vorstehenden Ansprüche, **dadurch gekennzeichnet, dass** das Anion der ionischen Flüssigkeiten Tetrafluorborat ([BF4]) ist.

6. Verfahren nach Anspruch 4 oder 5, **dadurch gekennzeichnet, dass** die ionische Flüssigkeit [BMIM] [BF₄] enthält.

7. Verfahren nach Anspruch 6, **dadurch gekennzeichnet, dass** die Polymerpulverpartikel ausgewählt sind aus Polyetherketon, Polyaryletherketon, Homopolyamid, einem Copolyamid oder einem Gemisch aus Homo- und Copolyamid.

8. Verfahren nach einem der vorstehenden Ansprüche, **dadurch gekennzeichnet, dass** die Aufarbeitung der Polymerlösung bei Schritt C Abschrecken, Zentrifugieren, Entfernen von ionischer Flüssigkeit durch Pipette, Filtration, Waschen von Pulver mit Wasser, Waschen mit Alkoholen wie Ethanol, Trocknen in einem Ofen umfasst.

9. Verfahren nach einem der vorstehenden Ansprüche, **dadurch gekennzeichnet, dass** bei Schritt A wenigstens ein Segregationsmittel ausgewählt aus Zinkoxid, Siliciumcarbid und Siliciumoxid zu ionischen Flüssigkeiten zugegegben wird.

10. Verfahren nach einem der vorstehenden Ansprüche, **dadurch gekennzeichnet, dass** das dreidimensionale Druckverfahren ausgewählt ist aus Pulverbettfusion, Wannen-Photopolymerisation und Binder Jetting.

11. Verfahren nach einem der vorstehenden Ansprüche, **dadurch gekennzeichnet, dass** die sphäroidisierten Polymerpulverpartikel eine mittlere Sphärizität von 0,90 bis 1 aufweisen.

12. Formkörper, hergestellt durch dreidimensionales Druckverfahren unter Verwendung von sphäroidisierten Polymerpulverpartikeln, die durch ein Verfahren nach einem der Ansprüche 1 bis 11 hergestellt sind.

13. Verwendung von sphäroidisierten Polymerpulverpartikeln, **dadurch gekennzeichnet, dass** die Partikel durch ein Verfahren nach einem der Ansprüche 1 bis 11 hergestellt sind.

## Revendications

1. Procédé de sphéroïdisation de particules de poudre de polymère, en particulier destinées à être utilisées dans un procédé d'impression tridimensionnelle, comprenant les étapes séquentielles
A) l'ajout de particules de poudre de polymère à des liquides ioniques ce qui permet d'obtenir une dispersion de polymère,
B) l'exposition de la dispersion de polymère à de l'énergie et
C) le retraitement de la dispersion de polymère pour obtenir des particules de poudre de polymère sphéroïdisées, dans lequel la température de décomposition du liquide ionique est supérieure au point de fusion des particules de poudre de polymère,
**caractérisé en ce que** l'énergie à l'étape B est choisie parmi l'énergie micro-onde et
**en ce que** le cation des liquides ioniques est choisi dans le groupe constitué par les cations 1-éthyl-3-méthylimidazolium ([EMIM]), 1-butyl-3-méthylimidazolium ([BMIM]), 1-hexyl-3-méthylimidazolium ([HMIM]), 1-octyl-3-méthylimidazolium ([OMIM]), 1-décyl-3-méthylimidazolium ([DMIM]), 1-méthylimidazolium ([MIM]), 1,2-diméthylimidazolium ([M12IM]), 1,3-diméthylimidazolium ([M13IM]), 1,2,3-triméthylimidazolium ([MMMIM]), 1-éthyl-2,3-diméthylimidazolium ([EMMIM]), 1-butyl-2,3-diméthylimidazolium ([BMMIM]), 1-allyl-3-méthylimidazolium ([AMIM]), 1-allyl-3-butylimidazolium ([ABIM]), 1-allyl-3-vinylimidazolium ([AVIM]), 1-(2-hydroxyéthyl)-3-méthylimidazolium ([HOEMIm]), N-éthylpyridinium ([EPy]), N-butylpyridinium ([BPy]), tétradécyltrihexylphosphonium ([P66614]), et tétrabutylphosphonium ([P4444]) ou
**en ce que** l'anion des liquides ioniques est choisi dans le groupe constitué par les anions tétrafluoroborate ([BF4]), hexafluorophosphate ([PF6]), bis(trifluorométhylsulfonyl)imidure ([Tf2N]), acétate ([Ac]), chlorure ([Cl]), bromure ([Br]), iodure ([I]), nitrate ([NO3]), trifluorométhanesulfonate ([TFO]), perchlorate ([Cl04]), dicyanamidure ([DCA]), hydrogénosulfate ([HSO4]), dihydrogénophosphate ([H2PO4]), tosylate ([TS]), glycinate ([Gly]), alaninate ([Ala]), sérinate ([Ser]), glutamate ([Glu]), lysinate ([Lys]) et prolinate ([Pro]).

2. Procédé selon la revendication 1, **caractérisé en ce que** les particules de poudre de polymère comprennent des particules polymères formées à partir d'un matériau comprenant au moins un polymère thermoplastique, l'au moins un polymère thermoplastique étant de préférence choisi dans le groupe constitué par les polyoléfines comme le polyéthylène ou le polypropylène, le poly(chlorure de vinyle), le polystyrène, les polycarbonates, le polyoxyméthylène, les polyimides, les polysulfones, les poly(N-méthylméthacrylimide), le polycarbonate (PC), l'acrylonitrile-butadiène-styrène (ABS), les ionomères, le poly(méthacrylate de méthyle), les poly(fluorure de vinylidène), les polyéthercétones, les polyaryléthercétones, les polyamides et les copolymères, mélanges et combinaisons de ceux-ci, l'au moins un polymère thermoplastique comprenant plus préférablement une polyéthercétone, une polyaryléthercétone, un homopolyamide, un copolyamide ou un mélange d'homopolyamide et de copolyamide.

3. Procédé selon l'une quelconque des revendications précédentes, **caractérisé en ce que** le cation des liquides ioniques est choisi dans le groupe constitué par les cations 1-éthyl-3-méthylimidazolium ([EMIM]), 1-butyl-3-méthylimidazolium ([BMIM]), 1-hexyl-3-méthylimidazolium ([HMIM]), 1-octyl-3-méthylimidazolium ([OMIM]), 1-décyl-3-méthylimidazolium ([DMIM], 1-méthylimidazolium ([MIM]), 1,2-diméthylimidazolium ([M12IM]), 1,3-diméthylimidazolium ([M13IM]), 1,2,3-triméthylimidazolium ([MMMIM]), 1-éthyl-2,3-diméthylimidazolium ([EMMIM]), 1-butyl-2,3-diméthylimidazolium ([BMMIM]), 1-allyl-3-méthylimidazolium ([AMIM]), 1-allyl-3-butylimidazolium ([ABIM]), 1-allyl-3-vinylimidazolium ([AVIM]), 1-(2-hydroxyéthyl)-3-méthylimidazolium ([HOEMIm]), N-éthylpyridinium ([EPy]), N-butylpyridinium ([BPy]), tétradécyltrihexylphosphonium ([P66614]) et tétrabutylphosphonium ([P4444]) et
**en ce que** l'anion des liquides ioniques est choisi dans le groupe constitué par les anions tétrafluoroborate ([BF4]), hexafluorophosphate ([PF6]), bis(trifluorométhylsulfonyl)imidure ([Tf2N]), acétate ([Ac]), chlorure ([Cl]), bromure ([Br]), iodure ([I]), nitrate ([NO3]), trifluorométhanesulfonate ([TFO]), perchlorate ([ClO4]), dicyanamidure ([DCA]), hydrogénosulfate ([HSO4]), dihydrogénophosphate ([H2PO4]), tosylate ([TS]), glycinate ([Gly]), alaninate ([Ala]), sérinate ([Ser]), glutamate ([Glu]), lysinate ([Lys]) et prolinate ([Pro]).

4. Procédé selon l'une quelconque des revendications précédentes, **caractérisé en ce que** le cation des liquides ioniques est le cation 1-butyl-3-méthylimidazolium ([BMIM]).

5. Procédé selon l'une quelconque des revendications précédentes, **caractérisé en ce que** l'anion des liquides ioniques est l'anion tétrafluoroborate ([BF4]).

6. Procédé selon la revendication 4 ou 5, **caractérisé en ce que** le liquide ionique contient du [BMIM] [BF₄].

7. Procédé selon la revendication 6, **caractérisé en ce que** les particules de poudre de polymère sont choisies parmi une polyéthercétone, une polyaryléthercétone, un homopolyamide, un copolyamide ou un mélange d'homopolyamide et de copolyamide.

8. Procédé selon l'une quelconque des revendications précédentes, **caractérisé en ce que** le retraitement de la solution de polymère à l'étape C comprend une trempe, une centrifugation, l'élimination de liquide ionique avec une pipette, une filtration, un lavage de poudre avec de l'eau, un lavage avec des alcools comme l'éthanol, un séchage dans un four.

9. Procédé selon l'une quelconque des revendications précédentes, **caractérisé en ce qu'**à l'étape A au moins un agent de ségrégation choisi parmi l'oxyde de zinc, le carbure de silicium et l'oxyde de silicium est ajouté aux liquides ioniques.

10. Procédé selon l'une quelconque des revendications précédentes, **caractérisé en ce que** le procédé d'impression tridimensionnelle est choisi parmi la fusion sur lit de poudre, la photopolymérisation en cuve ou la projection de liant.

11. Procédé selon l'une quelconque des revendications précédentes, **caractérisé en ce que** les particules de poudre de polymère sphéroïdisées ont une sphéricité moyenne de 0,90 à 1.

12. Corps façonné produit au moyen d'un procédé d'impression tridimensionnelle à l'aide des particules de poudre de polymère sphéroïdisées produites par un procédé selon l'une quelconque des revendications 1 à 11.

13. Utilisation de particules de poudre de polymère sphéroïdisées **caractérisée en ce que** les particules sont produites par un procédé selon l'une quelconque des revendications 1 à 11.
